# EUROPÄISCHE PATENTANMELDUNG

(11) **EP 3 454 154 A1**
(43) Veröffentlichungstag der Anmeldung: **13.03.2019**
(21) Anmeldenummer: 17189647.5
(22) Anmeldetag: 06.09.2017
(51) Int. Cl.: G05B 23/02

(54) **AUTOMATISIERTE ERKENNUNG VON STATISTISCHEN ABHÄNGIGKEITEN ZWISCHEN PROZESSMELDUNGEN**

(71) Anmelder: Siemens Aktiengesellschaft, 80333 München (DE)
(72) Erfinder: Borrmann, Martin, 76767 Hagenbach (DE); Bierweiler, Thomas, 76131 Karlsruhe (DE); Labisch, Daniel, 76149 Karlsruhe (DE); Lenz, Henning, 76135 Karlsruhe (DE); Paulitsch, Christoph, 76137 Karlsruhe (DE); Pfeiffer, Bernd-Markus, 76744 Wörth (DE)

(57) **Zusammenfassung**

Vorgeschlagen wird ein Verfahren zur Auswertung eines Meldungsarchivs mit einer Menge von Meldungen, die bei einer Steuerung und/oder Überwachung einer industriellen Anlage, insbesondere Fertigungs- oder Prozessanlage, generiert werden, wobei nur Meldungen innerhalb eines bestimmten Zeitbereichs mit einem Startzeitpunkt und einem Endzeitpunkt für die Auswertung berücksichtigt werden, und wobei die Meldungen wenigstens zwei sich voneinander unterscheidende Meldungsidentifikationen aufweisen, umfassend: Bestimmung einer absoluten Auftretenshäufigkeit von einzelnen Meldungsidentifikationen der Menge von Meldungen; Bestimmung einer Übergangswahrscheinlichkeit von jeweils zwei Meldungsidentifikationen bei wenigstens zwei Meldungsidentifikationen, vorzugsweise allen Meldungsidentifikationen der Menge an Meldungen, mittels der absoluten Auftretenshäufigkeiten; Identifizierung von Übergangswahrscheinlichkeiten zwischen jeweils zwei Meldungsidentifikationen, welche Übergangswahrscheinlichkeiten oberhalb eines bestimmten Schwellwertes liegen.

## Beschreibung

Die Erfindung betrifft ein Verfahren zur Auswertung eines Meldungsarchivs mit einer Menge von Meldungen, die bei einer Steuerung und/oder Überwachung einer industriellen Anlage, insbesondere Fertigungs- oder Prozessanlage, generiert werden, nach Anspruch 1. Außerdem betrifft die Erfindung ein dazugehöriges Computerprogramm mit durch einen Computer ausführbaren Programmcodeanweisungen nach Anspruch 15, ein Speichermedium gemäß Anspruch 16 und ein Computersystem nach Anspruch 17.

In fertigungstechnischen und prozesstechnischen Anlagen wird in dem dazugehörigen Leitsystem eine Vielzahl von Prozessmeldungen generiert. Die Prozessmeldungen dokumentieren beispielsweise Bedieneingriffe eines Benutzers (Bedienmeldungen), ein Verlassen eines Normalbereichs einzelner Prozessvariablen (Warnungen), ein Erreichen kritischer Werte (Alarme) sowie Diagnoseinformationen eines Automatisierungssystems (Systemmeldungen). Insbesondere Alarmmeldungen erfordern aufgrund ihrer Kritikalität ein sofortiges Handeln des Benutzers, um Qualitätseinbußen, Produktionsausfälle, Anlagenausfälle und, im schlimmsten Fall, Unfälle mit Personenbeteiligung zu verhindern.

Aktuell gültige Normen, beispielsweise die IEC 62682, empfehlen ein maximales Alarmaufkommen im Normalbetrieb von beispielsweise 10 Alarmen pro Stunde einzuhalten. Damit dieses Ziel erreicht werden kann, ist ein leistungsfähiges Alarmsystem notwendig. Im Rahmen dessen erzeugt insbesondere jede Ursache nur einen Alarm und jedem Alarm wird eine sinnvolle Bedeutung zugewiesen.

Eine alarmvermeidende Projektierung führt einen erheblichen Aufwand mit sich und erfordert ein spezifisches Prozesswissen, weshalb bekannte Alarmsysteme noch ein großes Optimierungspotential aufweisen. Insbesondere das, beispielsweise mit dem Prozessleitsystem SIMATIC PCS 7 betriebene, Bulk-Engineering, also ein Arbeiten mit Templates (Entwürfen) und möglichst automatisiertem Erzeugen einer Projektierung des Leitsystems, führt regelmäßig dazu, dass vor einer Inbetriebnahme einer fertigungstechnischen oder prozesstechnischen Anlage eine individuelle und zielgerichtete Parametrierung des Alarmsystems nur einen niedrigen Stellenwert aufweist.

Experten der Verfahrenstechnik müssen in aufwändiger Weise Auswirkungen möglicher Störungen abschätzen, beispielsweise mithilfe einer Fehlermöglichkeits- und -einflussanalyse (kurz: FMEA), und sinnvolle Meldungen definieren, um die möglichen Störungen der fertigungstechnischen oder prozesstechnischen Anlage zu erkennen. Speziell kritische Prozesszustände müssen dabei sicher erkannt werden. Gerade bei kritischen Prozesszuständen kommt es jedoch zu einer Vielzahl von Alarmen, einer sogenannten Alarmflut oder einem Alarmschauer. Insbesondere aus Kostengründen wird auf ein detailliertes Engineering der Alarme jedoch häufig verzichtet.

Regelmäßig wird erst nach Inbetriebnahme der fertigungstechnischen oder prozesstechnischen Anlage mittels der im Betrieb auftretenden Alarme sukzessive ein Alarmmanagement aufgebaut, wofür beispielsweise eine Häufigkeit der auftretenden Alarme herangezogen wird. Dieser Vorgang ist jedoch mangels systematischer Herangehensweisen und Unterstützung durch Softwaretools langwierig und arbeitsaufwändig. Zudem führt er oftmals nicht zu dem gewünschten Ergebnis oder die Qualität des Ergebnisses hängt stark von der Erfahrung des jeweiligen Verfahrensexperten ab.

Aus der WO 2010/133234 ist ein Verfahren zur Analyse einer Menge von Meldungen bekannt, die bei einer Steuerung und/oder Überwachung eines technischen Prozesses auftreten. Hierzu wird in der WO 2010/133234 vorgeschlagen, dass auf Basis der in einem Meldungsarchiv archivierten Meldungen spezielle Grammatiken erstellt werden, die auf einer Zusammenfassung von zeitlich benachbarten Meldungen beruhen. Einer Abfolge der Meldungen mit den Meldungsidentifikationen "A" und "B" wird beispielsweise die Bedeutung "X" zugewiesen. Dieses Verfahren kann dabei auch wiederholt werden, so dass auch Meldungssequenzen beliebiger Länge erkannt werden können. Zusätzlich können Filter vor der Sequenzerkennung angewandt werden, so dass beispielsweise nur eine Teilmenge des Meldungsarchivs für die Sequenzsuche verwendet werden können.

Des Weiteren ist in der WO 2010/133234 ein intelligenter Filter beschrieben, der Meldungsintervalle auf Basis eines parametrierbaren Zeitintervalls erzeugt. Innerhalb dieser zeitlich eingegrenzten Meldungsintervalle wird dann nach den Meldungssequenzen gesucht. Eine Wiedererkennung der identifizierten Meldungssequenzen erfolgt auf Basis endlicher Automaten.

Die endlichen Automaten können jedoch nicht mit unabhängig innerhalb einer Sequenz aufgetretenen Meldungsidentifikationen umgehen. Wurde beispielsweise eine Sequenz "A-B-C" identifiziert, so kann sie von den endlichen Automaten nicht wiedererkannt werden, wenn die Meldungsidentifikationssequenz "A-B-D-C" auftritt. Gerade in großen fertigungstechnischen oder prozesstechnischen Anlagen ist jedoch davon auszugehen, dass fortwährend Meldungen aus unterschiedlichen Bereichen auftreten und eine Wahrscheinlichkeit für die zuvor beschriebene Unterbrechung der einzelnen Meldungsidentifikationssequenzen sehr hoch ist.

Der Erfindung liegt die Aufgabe zugrunde, ein Verfahren zur Auswertung eines Meldungsarchivs mit einer Menge von Meldungen, die bei einer Steuerung und/oder Überwachung einer industriellen Anlage, insbesondere Fertigungs- oder Prozessanlage, generiert werden, anzugeben, das eine vollautomatisierte Auswertung großer Meldungsarchive ermöglicht.

Diese Aufgabe wird gelöst durch ein Verfahren zur Auswertung eines Meldungsarchivs mit einer Menge von Meldungen, die bei einer Steuerung und/oder Überwachung einer industriellen Anlage, insbesondere Fertigungs- oder Prozessanlage, generiert werden, nach Anspruch 1, durch ein dazugehöriges Computerprogramm mit durch einen Computer ausführbaren Programmcodeanweisungen nach Anspruch 15, ein Speichermedium gemäß Anspruch 16 und ein Computersystem nach Anspruch 17. Vorteilhafte Weiterbildungen ergeben sich aus den abhängigen Ansprüchen.

Bei einem Auswertungsverfahren der eingangs beschriebenen Art wird die Aufgabe erfindungsgemäß dadurch gelöst, dass nur Meldungen innerhalb eines bestimmten Zeitbereichs mit einem Startzeitpunkt und einem Endzeitpunkt für die Auswertung berücksichtigt werden, wobei die Meldungen wenigstens zwei sich voneinander unterscheidende Meldungsidentifikationen aufweisen, und wobei das erfindungsgemäße Verfahren die folgenden Verfahrensschritte umfasst:
a) Bestimmung einer absoluten Auftretenshäufigkeit von einzelnen Meldungsidentifikationen der Menge von Meldungen;
b) Bestimmung einer Übergangswahrscheinlichkeit von jeweils zwei Meldungsidentifikationen bei wenigstens zwei Meldungsidentifikationen, vorzugsweise allen Meldungsidentifikationen der Menge an Meldungen, mittels der absoluten Auftretenshäufigkeiten;
c) Identifizierung von Übergangswahrscheinlichkeiten zwischen jeweils zwei Meldungsidentifikationen, welche Übergangswahrscheinlichkeiten oberhalb eines bestimmten Schwellwertes liegen.

Unter dem Begriff "Meldung" wird im Folgenden jede Anzeige oder Bericht eines beliebigen Ereignisses verstanden, das innerhalb der industriellen Anlage auftritt.

Jede Meldung weist eine "Meldungsidentifikation" auf, die beispielsweise eine Meldungsklasse (Alarm, Bedieneingriff usw.) oder eine Zuweisung zu einer bestimmten Maschine oder dgl. der industriellen Anlage umfasst.

Das erfindungsgemäße Verfahren sieht vor, dass statistische Abhängigkeiten zwischen einzelnen Meldungsidentifikationen der in dem Meldungsarchiv befindlichen Menge an Meldungen bestimmt werden, um eine Anpassung einer Alarmparametrierung der prozesstechnischen oder fertigungstechnischen Anlage vereinfacht und zielgerichtet durchführen zu können. Die Erfindung basiert auf der Grundannahme, dass verschiedene Meldungsidentifikationen mit einer signifikanten Übergangswahrscheinlichkeit auch eine gewisse Abhängigkeit voneinander aufweisen. Signifikant bedeutet in diesem Zusammenhang, dass die Übergangswahrscheinlichkeit betragsmäßig oberhalb des bestimmten Schwellenwertes liegt.

Als Schwellwert kann beispielsweise ein Wert von 50% verwendet werden. Im Rahmen des erfindungsgemäßen Verfahrens bedeutet dies, dass nur Übergangswahrscheinlichkeiten zwischen einzelnen, sich voneinander unterscheidenden Meldungsidentifikationen berücksichtigt werden, die einen Wert von mehr als 50% aufweisen. Alle (zeitlichen) Übergänge zwischen Meldungsidentifikationen, die kleiner oder gleich des Schwellwertes liegen, werden für die Auswertung des Meldungsarchivs nicht verwendet.

Eine Anpassung des Alarmmanagements kann durch Anwendung des erfindungsgemäßen Verfahrens deutlich erleichtert werden, da die ermittelten, entsprechend gefilterten Abhängigkeiten zwischen den einzelnen Meldungsidentifikationen die nahezu unüberschaubare Gesamtmenge an Abhängigkeiten zwischen den einzelnen Meldungsidentifikationen in überschaubare, einfacher weiterverarbeitbare Teilmengen an Abhängigkeiten unterteilt.

Wird beispielsweise gefunden, dass auf die Meldungsidentifikation "A" mit einer signifikanten Wahrscheinlichkeit die Meldungsidentifikation "B" folgt, so kann angenommen werden, dass ein Zusammenhang zwischen den beiden Meldungsidentifikationen besteht. Angenommen, es handle sich bei der Meldungsidentifikation "A" um eine Bedienmeldung und bei der Meldungsidentifikation "B" um einen Alarm, so folgt daraus, dass sich aus einem bestimmten Bedieneingriff regelmäßig ein Alarm ergibt. Ein Betreiber der prozesstechnischen oder fertigungstechnischen Anlage kann aufgrund dieser Information entscheiden, ob der ausgelöste Alarm nach dem bestimmten Bedieneingriff überhaupt sinnvoll ist. Üblicherweise sollten Alarme keinen Hinweis auf einen regulären Bedieneingriff, sondern auf ein Fehlverhalten geben. Alternativ könnte auch der regelmäßige Bedieneingriff so modifiziert werden, dass der Alarm nicht mehr ausgelöst wird.

Folgt beispielsweise auf die Meldungsidentifikation "B", die beispielhaft einen Alarm darstellt, mit hinreichender Wahrscheinlichkeit die Meldungsidentifikation "C", die wiederum einen Bedieneingriff verkörpert, so kann daraus geschlossen werden, dass es sich möglicherweise um eine bestimmte Reaktion eines Bedieners der Anlage zur Behebung der Ursache des Alarms handelt. Hieraus ergibt sich dann gegebenenfalls die Möglichkeit, diese Reaktion vollständig zu automatisieren.

Eine einfache Betrachtung von absoluten Häufigkeiten der einzelnen Meldungsidentifikationen, wie sie bisher häufig angewandt wird, kann die komplexen Zusammenhänge, die sich durch Anwendung des erfindungsgemäßen Verfahrens ergeben, nicht ermitteln, weshalb sinnvolle Anpassungen des Alarmmanagements bislang nicht oder nur sehr stark eingeschränkt möglich waren.

Bei einer vorteilhaften Weiterbildung des Verfahrens werden nur Meldungsidentifikationen des Meldungsarchivs mit der Menge an Meldungen berücksichtigt, deren absolute Auftretenshäufigkeiten oberhalb eines bestimmten Schwellwertes liegen. Dadurch lassen sich unbedeutendere Meldungsidentifikationen von der weiteren Auswertung ausschließen, wodurch die betrachtete Teilmenge der Gesamtmenge an Meldungsidentifikationen verringert werden kann, was die Übersichtlichkeit der erzielten Ergebnisse erhöht und eine Weiterverarbeitung selbiger erleichtert.

Der Startzeitpunkt und/oder der Endzeitpunkt des bestimmten Zeitintervalls, in dem die Meldungen zur Auswertung berücksichtigt werden, können variabel bestimmbar sein. Dadurch lässt sich die Auswertung auf bestimmte Zeitintervalle beschränken, die beispielsweise von besonderem Interesse sind. Die zeitliche Beschränkung begrenzt auch die Komplexität des erfindungsgemäßen Verfahrens und kann den Bearbeitungsaufwand verringern.

Vorteilhafterweise wird im Rahmen des Auswertungsverfahrens eine vorzugsweise quadratische Wahrscheinlichkeitsmatrix bestimmt, deren Spaltenanzahl und Zeilenanzahl jeweils einer Anzahl der sich voneinander unterscheidenden Meldungsidentifikationen entspricht, wobei die Matrix Elemente umfasst, die jeweils die Übergangswahrscheinlichkeit von jeweils zwei sich voneinander unterscheidenden Meldungsidentifikationen darstellen. Die Darstellung und Verarbeitung der Daten in einer oder mehrerer Matrizen erleichtert die Durchführung und erhöht die Übersichtlichkeit des Auswertungsverfahrens deutlich.

Bei einer vorteilhaften Weiterbildung der Erfindung werden im Anschluss an die erfindungsgemäß durchgeführten Verfahrensschritte folgende Schritte durchgeführt:
a) Festlegung einer Zeitdifferenz, die vorzugsweise kleiner ist als der Zeitbereich, in dem die Meldungen ausgewertet werden;
b) Identifizierung einer ersten Meldung, die eine erste Meldungsidentifikation aufweist, und einer zweiten, zeitlich innerhalb der Zeitdifferenz nachfolgenden Meldung, die eine zweiten, Meldungsidentifikation aufweist, wobei die dazugehörige Übergangswahrscheinlichkeit von der ersten Meldungsidentifikation zu der zweiten Meldungsidentifikation oberhalb des bestimmten Schwellwertes liegen muss;
c) Zusammenfassung der beiden Meldungen als eine 2er-Kette;
d) Wiederholung der Verfahrensschritte b und c bei jeder innerhalb des zu berücksichtigenden Zeitbereichs liegenden Meldung.

Der Begriff "Zeitbereich", der zur Beschreibung des erfindungsgemäßen Verfahrens verwendet wird, meint einen bestimmten Teilbereich des Meldungsarchivs, der zur Auswertung hinzugezogen wird. Beispielsweise findet eine Auswertung innerhalb eines Zeitbereichs von t = 0 min bis zu t = 60 min statt.

Der Begriff "Zeitdifferenz" wird in einem anderen Kontext verwendet. Im Rahmen der zuvor erläuterten Weiterbildung des Auswerteverfahrens wird von einer ersten Meldung mit einer ersten Meldungsidentifikation als Basis ausgegangen. Anschließend wird in dem Meldungsarchiv nach einer zweiten Meldung mit einer zweiten Meldungsidentifikation (von der ersten Meldungsidentifikation verschieden) gesucht. Die zweite Meldungsidentifikation darf dabei aber zeitlich nicht später aufgetreten sein als es durch die bestimmte Zeitdifferenz vorgegeben wird. Ist die erste Meldung mit der ersten Meldungsidentifikation beispielweise bei der absoluten Zeit t = 25 min aufgetreten und die Zeitdifferenz auf 5 min festgelegt worden, so muss die zweite Meldung mit der zweiten Meldungsidentifikation zwischen der absoluten Zeit t = 25 min und t = 30 min aufgetreten sein, um berücksichtigt zu werden. In dem beschriebenen Rahmen wird demnach eine absolute Zeitdifferenz verwendet, d.h. wenn die Zeitdifferenz ausgehend von der bestimmten zweiten Meldungsidentifikation verstrichen ist, ist die Suche nach weiteren Meldungsidentifikationen beendet. Ein hiervon abweichender Gebrauch der Zeitdifferenz wird im weiteren Verlauf erläutert.

Nach der Durchführung der zuvor erläuterten Weiterbildung des erfindungsgemäßen Verfahrens liegt jede Meldungsidentifikation, auf den innerhalb der festgelegten Zeitdifferenz mit hinreichender Wahrscheinlichkeit eine zweite Meldungsidentifikation folgt, in Form einer 2er-Kette, bestehend aus der ersten und der zweiten Meldungsidentifikation, vor. Diese können direkt als Informationsquelle zur Verbesserung des Alarmmanagements genutzt werden oder weiterverarbeitet werden.

Im Rahmen einer besonders vorteilhaften Weiterbildung des Auswerteverfahrens wird die Menge an Meldungen innerhalb der festgelegten Zeitdifferenz ausgehend von der zweiten Meldung mit der zweiten Meldungsidentifikation nach weiteren, zeitlich nachfolgenden Meldungen durchsucht, bis ein Ende der Zeitdifferenz erreicht ist. Dabei werden die weitere Meldung oder die weiteren Meldungen nur berücksichtigt, wenn die Übergangswahrscheinlichkeit der zeitlich davorliegenden Meldungsidentifikation zu der weiteren Meldungsidentifikation oberhalb des bestimmten Schwellwertes liegt. Die gefundenen weiteren Meldungen zusammen mit der ersten und zweiten Meldung als eine weitere Kette, insbesondere 3er-Kette, 4er-Kette oder 5er-Kette.

Die zuvor erläuterten Verfahrensschritte werden anschließend bei jeder innerhalb des zu berücksichtigenden Zeitbereichs liegenden 2er-Kette angewandt. Als Ergebnis erhält man dadurch alle möglichen 2er-, 3er-, 4er-Ketten usw. innerhalb des ausgewerteten Zeitbereichs des Meldungsarchivs. Dadurch lassen sich auch komplexere Zusammenhänge zwischen einzelnen Meldungsidentifikationen erfassen und auswerten. Das Alarmmanagement kann damit besonders wirkungsvoll verbessert werden.

Alternativ zur zuvor erläuterten Weiterbildung des Auswerteverfahrens können folgende Verfahrensschritte im Anschluss an die Bestimmung bzw. Identifizierung der 2er-Ketten durchgeführt werden:
a) Ausgehend von einer zweiten Meldung einer 2er-Kette, die eine zweite Meldungsidentifikation aufweist, Durchsuchung der Menge an Meldungen innerhalb der Zeitdifferenz nach einer bestimmten Anzahl an weiteren, zeitlich nachfolgenden Meldungen;
b) Berücksichtigen der weiteren Meldung, wenn die Übergangswahrscheinlichkeit der zeitlich davorliegenden Meldungsidentifikation zu der weiteren Meldungsidentifikation oberhalb des bestimmten Schwellwertes liegt;
c) Zusammenfassung der gefundenen weiteren Meldungen sowie der ersten und zweiten Meldung als eine weitere Kette, insbesondere 3er-Kette, 4er-Kette oder 5er-Kette;
d) Wiederholung der Verfahrensschritte b und c bei jeder innerhalb des zu berücksichtigenden Zeitbereichs liegenden 2er-Kette.

Im Rahmen der zuvor erwähnten alternativen Anwendung des Mittels der Zeitdifferenz beginnt im Rahmen der beiden zuvor erläuterten Weiterbildungen die Zeitdifferenz bevorzugt nach jeder gefundenen weiteren Meldungsidentifikation von neuem zu laufen. Diese bedeutet, dass, wenn die zweite Meldungsidentifikation "B" ist, ausgehend von der zweiten Meldungsidentifikation innerhalb der Zeitdifferenz gesucht wird, ob das Meldungsarchiv weitere Meldungen enthält, die zeitlich innerhalb der Zeitdifferenz, gerechnet ab dem Auftreten der zweiten Meldungsidentifikation "B", auftreten. Wird eine solche weitere Meldung gefunden (die das Kriterium bzgl. der Übergangswahrscheinlichkeit erfüllt), wird ausgehend von dieser weiteren Meldung wiederum innerhalb der Zeitdifferenz nach einer weiteren Meldung gesucht. Der Anfangs- oder Bezugszeitpunkt für die Zeitdifferenz ist somit variabel bzw. er "gleitet".

Im Gegensatz zu der zuvor erläuterten Weiterbildung des Auswerteverfahrens wird hierbei gezielt nach einer 3er-Kette, einer 4er-Kette usw. gesucht werden. Ketten mit einer Vielzahl von Kettengliedern können so gezielt von der Suche ausgeschlossen werden, um den Bearbeitungsaufwand zu reduzieren. Oder es ist alternativ bekannt, welche Länge bestimmte Prozessschritte aufweisen, so dass gezielt nach Ketten mit einer bestimmten Anzahl von Kettengliedern gesucht werden kann, wodurch sich die Ketten deutlich einfacher interpretieren lassen.

Bevorzugt werden Ketten, die jeweils aus Meldungen mit bestimmten Meldungsidentifikationen bestehen, unbeachtlich einer zeitlichen Reihenfolge der Meldungen jeweils zu einer Gruppe zusammengefasst. Beispielsweise werden die Meldungsketten "A-B-C", "B-C-A" und "C-A-B" alle in einer einzigen Gruppe zusammengefasst. Die Zusammenfassung von Meldungsketten zu übergeordneten Meldungsgruppen kann einen Aufwand einer Interpretation der Ergebnisse verringern und die Übersichtlichkeit der Ergebnisse erhöhen.

Vorteilhafterweise werden zur Durchführung einer nachfolgenden Auswertung nur Ketten und/oder Gruppen berücksichtigt, die eine Auftretenshäufigkeit aufweisen, die oberhalb eines bestimmten Schwellwertes liegt. Dadurch lassen sich weniger relevante Ketten und/oder Gruppen von Meldungen von bedeutenderen unterscheiden, und der Bearbeitungsaufwand, speziell im Rahmen einer anschließenden weiteren Auswertung, lässt sich erheblich reduzieren.

Bevorzugt werden für das Auswerteverfahren nur bestimmte Meldungsklassen, die innerhalb einer industriellen Anlage, insbesondere einer Fertigungs- oder Prozessanlage, auftreten, nur berücksichtigt, wenn sie bestimmte Meldungsklassen aufweisen. Dabei kann es sich bei den Meldungsklassen insbesondere um Bedieneingriffe eines Benutzers (Bedienmeldungen), Meldungen beim Verlassen eines Normalbereichs einzelner Prozessvariablen (Warnungen), Meldungen beim Erreichen kritischer Werte (Alarme) sowie Diagnoseinformationen eines Automatisierungssystems (Systemmeldungen) handeln.

In die Auswertung der Menge an Meldungen können auch Informationen über Instandhaltungsmaßnahmen oder Wartungsarbeiten miteinbezogen werden. Instandhaltungsmaßnahmen können beispielsweise Inspektionen, Wartungen, Instandsetzungen oder Verbesserungen sein. Durch die Einbeziehung dieser Informationen kann das Alarmmanagement weiter verbessert werden.

Im Rahmen einer vorteilhaften Weiterbildung des Auswerteverfahrens werden die ermittelten zeitlichen Abfolgen und/oder Gruppen von Meldungsidentifikationen mit prozesseigenen Schrittketten der industriellen Anlage korreliert, um insbesondere erkennen zu können, ob bestimmte Meldungsidentifikationen nur in bestimmten Schritten der prozesseigenen Schrittketten auftreten. Eine projektierte Schrittkette kann dabei beispielsweise folgende Schritte umfassen:
a) Einschalten eines Motors
b) Pumpe arbeitet
c) ein Durchfluss entsteht
d) ein Druck wird erzeugt
e) ein Füllstand in einem hinter der Pumpe liegenden Behälter wird erreicht.

Durch die Korrelation der Daten kann in dem erläuterten Beispiel ermittelt werden, ob bestimmte Meldungen bzw. Meldungsidentifikationen nur in einem bestimmten Schritt der Schrittkette auftreten, beispielsweise die Meldung über eine kurzzeitige Druckerhöhung beim Einschalten des Motors. Daraus würde sich beispielsweise folgern lassen, dass das Alarmmanagement schrittabhängige Grenzwerte verwenden sollte.

Bei einer vorteilhaften Weiterbildung der Erfindung wird eine zeitliche Anfangsabfolge einer Kette, die mehr als zwei Meldungen umfasst, in einem bestimmten Zeitbereich einer zweiten, zeitlich der ersten Menge an Meldungen nachfolgenden Menge an Meldungen erkannt und daraufhin eine bestimmte Meldung erzeugt, um prädiktiv auf ein bevorstehendes, zeitlich nachfolgendes Ereignis hinweisen zu können. Wenn ein bestimmtes Muster einer Kette oder Gruppe von zeitlich aufeinanderfolgenden Meldungsidentifikationen häufig auftritt, so kann dies ein Hinweis auf eine bestimmte Problemsituation in der Anlage sein. Falls ein Anfang einer längeren Kette, die mehr als zwei Meldungen bzw. Meldungsidentifikationen umfasst, bei einem Online-Betrieb der Anlage erkannt wird, kann das dazu genutzt werden, frühzeitig eine Warnmeldung zu erzeugen und prädiktiv auf ein bevorstehendes Ereignis hinzuweisen. Zur Warnmeldung hinzu können auch (automatisiert) Hinweise auf möglicherweise sinnvolle Maßnahmen gegeben werden.

Das beschriebene Verfahren mit seinen Ausgestaltungen ist bevorzugt in einer Software implementiert. Die zuvor ausgeführte Aufgabe wird entsprechend auch durch ein Computerprogramm mit durch einen Computer ausführbaren Programmcodeanweisungen zur Implementierung des erfindungsgemäßen Verfahrens gelöst. Bei dem Computer kann es sich beispielsweise um ein Automatisierungsgerät mit einer Verarbeitungseinheit nach Art eines Prozessors oder dergleichen handeln.

Ein Automatisierungsgerät, insbesondere ein Industrieautomatisierungsgerät, auf dem ein derartiges Computerprogramm implementiert ist, ist ein Beispiel für ein Computersystem, auf welches sich die Erfindung ebenfalls bezieht. Anstelle des Automatisierungsgerätes kommen auch Standardcomputer, wie sie bei der Büroautomatisierung üblich sind, in Betracht.

Das Computerprogramm zur Implementierung des Verfahrens wird üblicherweise auf oder in einem Speichermedium, also beispielsweise auf einem magnetischen oder optischen Datenträger oder in einem Halbleiterspeicher, vorgehalten, so dass die Erfindung auch ein Speichermedium mit einem durch einen Computer ausführbaren Computerprogramm zur Implementierung des erfindungsgemäßen Verfahrens und seiner Ausgestaltungen betrifft.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels.

Bei der Steuerung oder Überwachung eines technischen Prozesses einer industriellen Prozess- oder Fertigungsanlage wird regelmäßig eine Vielzahl an Meldungen erzeugt. Bei solchen Meldungen kann es sich, wie zuvor bereits erläutert, um Hinweise auf Fehler oder Ausnahmesituationen, z.B. Hinweise auf erreichte oder überschrittene Grenzwerte und dergleichen, handeln. Die Art und der Ursprung solcher Meldungen ist über die exemplarisch erwähnten Beispiele hinaus äußerst vielfältig und jede in der Anlage erzeugte oder verarbeitete Meldung soll im Folgenden als von der Bezeichnung Meldung umfasst gelten.

Es hat sich gezeigt, dass bei bestimmten Betriebssituationen eine solche Fülle von Meldungen ("Alarmschauer") auftritt, dass es einem die Anlage bzw. den Fertigungsprozess oder die Prozesssierung beaufsichtigenden Bediener schwerfällt, die Übersicht zu wahren und bei eventuellen schwerer wiegenden Fehlern geeignete Gegenmaßnahmen einzuleiten.

Bislang ist es häufig so, dass der Bediener sein Erfahrungswissen nutzt, das er durch die Ausbildung und den Umgang mit der Anlage, gesammelt hat, um Fehler und dergleichen, die den Betrieb der Anlage stören, schnell beseitigen zu können. Durch Antizipation wird versucht, Auswirkungen zu unterbinden, was bei komplexen Anlagen zunehmend schwieriger und risikoreicher wird. Teilweise ist nur aus Erfahrung bekannt, welche Maßnahmen bei bestimmten Meldungsfluten erforderlich sind.

Häufig kann auch schon auf bestimmte Wirkungen einer Ursache einer bestimmten Meldung reagiert werden, weil die jeweilige Ursache aus Erfahrung, d.h. aus in der Vergangenheit erhaltenen Meldungen, und einer dabei erkannten Ursache bekannt sind.

Ein automatisierter Ansatz zur Einschränkung der Meldungsflut, der nicht ausschließlich auf der Erfahrung der betroffenen Bediener basiert, ist mit dem von der Anmelderin der vorliegenden Erfindung unter der Marke SIMATIC PCS 7 vertriebenen Prozessleitsystem bekannt geworden. Dort ist es möglich, bei der Projektierung Anlagen- und Betriebszustände zu definieren, die jeweils ein unterschiedliches Meldeverhalten erfordern oder nach sich ziehen.

In bestimmten Anlagenzuständen überflüssige Meldungen können bereits bei der Generierung oder Weiterverarbeitung aufgrund logischer Verknüpfungen unterbunden werden. Außerdem können einzelne Meldungsidentifikationen, beispielsweise Alarme, quasi ausgeblendet werden, d.h. sie werden dem Bediener nicht angezeigt, aber weiterhin in einem Meldungsarchiv hinterlegt.

Die bislang bekannte alarmvermeidende Projektierung führt jedoch einen erheblichen Aufwand mit sich und erfordert ein spezifisches Prozesswissen, weshalb die bekannten Alarmsysteme noch ein großes Optimierungspotential aufweisen.

Im Folgenden wird ein Ausführungsbeispiel des erfindungsgemäßen Verfahrens erläutert. Ein Meldungsarchiv einer industriellen Fertigungs- oder Prozessanlage wird in einem Zeitbereich von t = 1 min bis zu t = 28 min betrachtet. Das Meldungsarchiv enthält Alarmmeldungen mit den Meldungsidentifikationen "A", "B", "C", "D", "E", "F", "G", "H" und "I". Die Alarmmeldungen sind in der folgenden zeitlichen Abfolge in dem Meldungsarchiv hinterlegt:

| Zeit in min | Meldungstyp | Zeit in min | Meldungstyp | Zeit in min | Meldungstyp |
|---|---|---|---|---|---|
| 1 | B | 16 | F | 20 | C |
| 3 | C | 16 | D | 20 | H |
| 5 | D | 17 | G | 21 | D |
| 10 | B | 17 | A | 22 | I |
| 11 | E | 18 | F | 23 | H |
| 12 | A | 18 | E | 26 | A |
| 13 | B | 18 | B | 27 | D |
| 15 | C | 19 | G | 28 | D |

a) In einem ersten Schritt werden die in dem betrachteten Zeitbereich des Meldungsarchivs enthaltenen Meldungsidentifikationen identifiziert und deren absolute Auftretenshäufigkeit bestimmt. Die folgende Übersicht zeigt die ermittelten absoluten Auftretenshäufigkeiten (Histogramm) der einzelnen Meldungsidentifikationen:

| Meldungstyp | Häufigkeit |
|---|---|
| A | 3 |
| B | 4 |
| C | 3 |
| D | 5 |
| E | 2 |
| F | 2 |
| G | 2 |
| H | 2 |
| I | 1 |

b) Für die weitere Auswertung werden nur Meldungsidentifikationen berücksichtigt, die oberhalb eines bestimmten Schwellwertes liegen. Dieser wird exemplarisch auf den Wert 3 festgelegt. Für die weitere Auswertung werden demnach im vorliegenden Ausführungsbeispiel nur die Meldungsidentifikationen "A", "B", "C" und "D" berücksichtigt. Dadurch lassen sich die unbedeutenderen Meldungsidentifikationen "E", "F", "G", "H" und "I" von der weiteren Auswertung ausschließen, wodurch die betrachtete Teilmenge der Gesamtmenge an Meldungsidentifikationen verringert werden kann, was die Übersichtlichkeit der erzielten Ergebnisse erhöht und eine Weiterverarbeitung selbiger erleichtert.
c) Für die weitere Auswertung werden eine Frequenzmatrix und eine Übergangswahrscheinlichkeitsmatrix allokiert und mit den Werten "0" versehen. Beide Matrizen haben die Größe (Anzahl berücksichtigte Meldungsidentifikationen x Anzahl berücksichtigte Meldungsidentifikationen), was im vorliegenden Ausführungsbeispiel einer Größe 4x4 entspricht. Im Folgenden ist auf der linken Seite die Frequenzmatrix dargestellt, auf der rechten Seite die Übergangswahrscheinlichkeitsmatrix:

| | A | B | C | D |
|---|---|---|---|---|
| A | 0 | 0 | 0 | 0 |
| B | 0 | 0 | 0 | 0 |
| C | 0 | 0 | 0 | 0 |
| D | 0 | 0 | 0 | 0 |

| | A | B | C | D |
|---|---|---|---|---|
| A | 0 | 0 | 0 | 0 |
| B | 0 | 0 | 0 | 0 |
| C | 0 | 0 | 0 | 0 |
| D | 0 | 0 | 0 | 0 |

d) Beginnend mit dem zeitlich zuerst auftretende Meldungsidentifikation "B" werden alle Meldungsidentifikationen identifiziert, die zeitlich nach der ersten Meldungsidentifikation "B" auftreten. Die Suche ist beendet, wenn die Meldungsidentifikation "B" erneut auftritt. Vorliegend liegt eine Meldung mit der Meldungsidentifikation "C" und eine Meldung mit der Meldungsidentifikation "D" zwischen den beiden Meldungsidentifikationen "B". Dabei ist es ohne Bedeutung, wie oft die jeweiligen Meldungsidentifikationen gegebenenfalls zwischen den beiden Meldungsidentifikationen "B" auftreten. Die entsprechenden Matrixelemente der Frequenzmatrix werden um 1 erhöht, so dass sich folgende Matrizen ergeben:

| | A | B | C | D |
|---|---|---|---|---|
| A | 0 | 0 | 0 | 0 |
| B | 0 | 0 | 0 | 0 |
| C | 0 | 1 | 0 | 0 |
| D | 0 | 1 | 0 | 0 |

| | A | B | C | D |
|---|---|---|---|---|
| A | 0 | 0 | 0 | 0 |
| B | 0 | 0 | 0 | 0 |
| C | 0 | 0 | 0 | 0 |
| D | 0 | 0 | 0 | 0 |

e) Der zuletzt beschriebene Schritt wird für alle in dem Zeitbereich des Meldungsarchivs vorkommenden Meldungsidentifikationen "B" wiederholt, so dass sich die folgenden Matrizen ergeben:

| | A | B | C | D |
|---|---|---|---|---|
| A | 0 | 2 | 0 | 0 |
| B | 0 | 0 | 0 | 0 |
| C | 0 | 2 | 0 | 0 |
| D | 0 | 2 | 0 | 0 |

| | A | B | C | D |
|---|---|---|---|---|
| A | 0 | 0 | 0 | 0 |
| B | 0 | 0 | 0 | 0 |
| C | 0 | 0 | 0 | 0 |
| D | 0 | 0 | 0 | 0 |

f) Im folgenden Schritt wird die Übergangswahrscheinlichkeitsmatrix angepasst. Die Spalte mit der Bezeichnung "B" der Frequenzmatrix wird selektiert und elementweise (zeilenweise) durch das Maximum der absoluten Auftretenshäufigkeit der Meldungsidentifikation "B" und der Häufigkeit der jeweiligen Meldungsidentifikation in der jeweiligen Zeile der Frequenzmatrix geteilt. Das Maximum wird verwendet, um bei einer nur sporadisch bzw. zufällig oder sehr häufig auftretenden Meldungsidentifikation "B" keine Falschaussagen bezüglich der Übergangswahrscheinlichkeit zu anderen Meldungsidentifikationen zu treffen. Eine derartige Normierung bringt vor allem den Vorteil mit sich, dass häufig auftretende Meldungsidentifikationen nicht übergewichtet werden. Die absolute Auftretenshäufigkeit einzelner Meldungsidentifikationen sagt noch nichts über die jeweiligen Übergangswahrscheinlichkeiten zu anderen Meldungsidentifikationen aus, die im Rahmen dieser Erfindung einen großen Stellenwert einnehmen.
Neben der Verwendung des Maximums sind auch andere Werte als Referenz für die durchzuführende Normierung möglich.
Die absolute Auftretenshäufigkeit der Meldungsidentifikation "B" ist in vorliegendem Ausführungsbeispiel 4 (vergleiche das zuvor aufgeführte Histogramm). Das erste Zeilenelement bezieht sich auf die Meldungsidentifikation "A". Die Meldungsidentifikation "A" hat gemäß dem zuvor aufgeführten Histogramm eine absolute Auftretenshäufigkeit von 3. Das für dieses Matrixelement geltende Maximum hat daher einen Wert von 4. Der Wert 2 des Matrixelements wird durch 4 geteilt, so dass sich ein Wert von 0,5 für das korrespondierende Matrixelement der Übergangswahrscheinlichkeitsmatrix ergibt. Der Vorgang wird für alle Matrixelemente der Spalte "B" entsprechend wiederholt, so dass beide Matrizen die folgende Gestalt aufweisen:

| | A | B | C | D |
|---|---|---|---|---|
| A | 0 | 2 | 0 | 0 |
| B | 0 | 0 | 0 | 0 |
| C | 0 | 2 | 0 | 0 |
| D | 0 | 2 | 0 | 0 |

| | A | B | C | D |
|---|---|---|---|---|
| A | 0 | 0,5 | 0 | 0 |
| B | 0 | 0 | 0 | 0 |
| C | 0 | 0,5 | 0 | 0 |
| D | 0 | 0,4 | 0 | 0 |

g) Die zuvor erläuterten Schritte d-f) werden für die übrigen Meldungsidentifikationen "A", "C" und "D" wiederholt, so dass sich folgenden Matrizen ergeben:

| | A | B | C | D |
|---|---|---|---|---|
| A | 0 | 2 | 2 | 3 |
| B | 2 | 0 | 2 | 2 |
| C | 2 | 2 | 0 | 2 |
| D | 2 | 2 | 2 | 0 |

| | A | B | C | D |
|---|---|---|---|---|
| A | 0 | 0,5 | 0,67 | 0,6 |
| B | 0,5 | 0 | 0,5 | 0,4 |
| C | 0,67 | 0,5 | 0 | 0,4 |
| D | 0,4 | 0,4 | 0,4 | 0 |

Dabei wurden folgende Ketten von Meldungsidentifikationen ausgewertet:
Ausgehend von A: A-B-C-D-A (zweimal);
Ausgehend von B: B-C-D-B, B-A-B und B-C-D-A-B;
Ausgehend von C: C-D-B-A-B-C und C-D-A-B-C;
Ausgehend von D: D-B-A-B-C-D, D-A-B-C-D, D-A-D und D-D.
h) Als Schwellwert für die zu berücksichtigen Übergangswahrscheinlichkeiten wird ein Wert von 45% festgelegt. Alle Matrixelemente, die kleiner oder gleich 0,45 sind, werden auf 0 gesetzt, so dass die Matrizen folgende Gestalt haben:

| | A | B | C | D |
|---|---|---|---|---|
| A | 0 | 2 | 2 | 3 |
| B | 2 | 0 | 2 | 2 |
| C | 2 | 2 | 0 | 2 |
| D | 2 | 2 | 2 | 0 |

| | A | B | C | D |
|---|---|---|---|---|
| A | 0 | 0,5 | 0,67 | 0,6 |
| B | 0,5 | 0 | 0,5 | 0 |
| C | 0,67 | 0,5 | 0 | 0 |
| D | 0 | 0 | 0 | 0 |

Hintergrund dieses Schritts ist, dass eine Anpassung des Alarmmanagements dadurch deutlich erleichtert wird, da die ermittelten, entsprechend gefilterten Abhängigkeiten zwischen den einzelnen Meldungsidentifikationen die nahezu unüberschaubare Gesamtmenge an Abhängigkeiten zwischen den einzelnen Meldungsidentifikationen in überschaubare, einfacher weiterzuverarbeitbare Teilmengen an Abhängigkeiten unterteilt.
i) Im nachfolgenden Schritt werden häufig auftretende Ketten von Meldungsidentifikationen identifiziert, die für eine nachfolgende Analyse bzw. Weiterverarbeitung verwendet werden können. Für die nachfolgende Auswertung wird eine Zeitdifferenz von t = 4 min verwendet. Die Erfindung ist jedoch keinesfalls darauf beschränkt. Vielmehr können beliebige Werte für die Zeitdifferenz angenommen werden, wobei die Zeitdifferenz aus Praktikabilitätsgründen jedoch vorteilhafterweise kleiner als der festgelegte Zeitbereich ist, in dem das Meldungsarchiv ausgewertet wird.
In der nachfolgenden Matrix sind zeitlich aufeinanderfolgende Meldungsidentifikationen als Ketten dargestellt (die Zeilenbezeichnung entspricht dabei der Kettenbezeichnung, die Spaltenbezeichnung der absoluten Zeit in min). Zur Erstellung der Tabelle werden ausgehend jeweils von einer ersten Meldungsidentifikation alle nachfolgenden Meldungsidentifikationen in einer Zeile aufgeführt, die innerhalb der festgelegten Zeitdifferenz von t = 4 min auftreten. Tritt die jeweilige Ausgangsmeldungsidentifikation innerhalb der Zeitdifferenz auf, so werden keine zusätzlichen Meldungsidentifikationen mehr an die Kette angefügt (tritt in dem vorliegenden Ausführungsbeispiel nicht auf). Ausgehend von der Meldungsidentifikation "B" in der ersten Kette werden bis zu einer Zeit von t = 5 min weitere Meldungsidentifikationen gesucht und in die Matrix eingetragen (hier Meldungsidentifikation "C" bei t = 3 min und Meldungsidentifikation "D" bei t = 5 min).

| Zeit in min | 1 | 3 | 5 | 10 | 12 | 13 | 15 | 16 | 17 | 18 | 20 | 21 | 26 | 27 | 28 |
|---|---|---|---|---|---|---|---|---|---|---|---|---|---|---|---|
| 1) | B | C | D | | | | | | | | | | | | |
| 2) | | C | D | | | | | | | | | | | | |
| 3) | | | | B | A | B | | | | | | | | | |
| 4) | | | | | A | B | C | D | | | | | | | |
| 5) | | | | | | B | C | D | A | | | | | | |
| 6) | | | | | | | C | D | A | B | | | | | |
| 7) | | | | | | | | D | A | B | C | | | | |
| 8) | | | | | | | | | A | B | C | D | | | |
| 9) | | | | | | | | | | B | C | D | | | |
| 10) | | | | | | | | | | | C | D | | | |
| 11) | | | | | | | | | | | | | A | D | D |
| 12) | | | | | | | | | | | | | | D | D |

j) Für die weitere Auswertung werden in den zuvor aufgeführten Ketten 1-12) alle Teilketten identifiziert, die eine Teilmenge der jeweiligen Kette in der jeweiligen Zeile der obigen Matrix bilden. Hierzu werden nur Übergänge von Meldungsidentifikationen berücksichtigt, deren Übergangswahrscheinlichkeit entsprechend der zuvor ermittelten Übergangswahrscheinlichkeitsmatrix oberhalb des Schwellenwertes von 0,45 liegen.
Beispielsweise wird in der fünften Kette in der obigen Matrix (B-C-D-A) in eine 2er-Kette B-C und eine 3er-Kette B-C-A als relevant identifiziert. Die Meldungsidentifikation "D" wird dabei nicht berücksichtigt, da die Übergangswahrscheinlichkeit mit der Meldungsidentifikation "C" zur Meldungsidentifikation "D" kleiner oder gleich 0,45 ist. Entsprechend werden alle Ketten in der Matrix ausgewertet. Folgende Ketten werden dabei identifiziert:

| Kette | Anzahl |
|---|---|
| B-C | 3 |
| B-A | 1 |
| B-A-B | 1 |
| A-B | 2 |
| A-B-C | 2 |
| B-C-A | 1 |
| C-A | 1 |
| C-A-B | 1 |
| D-A | 1 |
| D-A-B | 1 |
| D-A-B-C | 1 |

k) Im Rahmen einer weiteren Auswertung werden Ketten mit gleichen Meldungsidentifikationen, unabhängig von einer Reihenfolge deren Auftretens, zu Gruppen zusammengefasst. Damit lässt sich ein Zusammenhang zwischen den einzelnen Meldungsidentifikationen weiter abstrahieren und das Alarmmanagement verfeinert gestalten. Im vorliegenden Ausführungsbeispiel ergeben sich folgende Gruppen:

| Gruppe | Anzahl |
|---|---|
| B, C | 3 |
| A, B | 3 |
| A, B, C | 4 |
| A, D | 1 |
| A, C | 1 |
| A, B, D | 1 |
| A, B, C, D | 1 |

l) In einem zusätzlichen Schritt werden zur Durchführung einer nachfolgenden Auswertung nur Ketten und/oder Gruppen berücksichtigt, die eine Auftretenshäufigkeit aufweisen, die oberhalb eines bestimmten Schwellwertes, beispielsweise 2, liegt. Dadurch lassen sich weniger relevante Ketten und/oder Gruppen von Meldungen von bedeutenderen unterscheiden, und der Bearbeitungsaufwand, speziell im Rahmen einer anschließenden weiteren Auswertung, lässt sich erheblich reduzieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Auswertung eines Meldungsarchivs mit einer Menge von Meldungen, die bei einer Steuerung und/oder Überwachung einer industriellen Anlage, insbesondere Fertigungs- oder Prozessanlage, generiert werden, wobei nur Meldungen innerhalb eines bestimmten Zeitbereichs mit einem Startzeitpunkt und einem Endzeitpunkt für die Auswertung berücksichtigt werden, und wobei die Meldungen wenigstens zwei sich voneinander unterscheidende Meldungsidentifikationen aufweisen, umfassend:
a) Bestimmung einer absoluten Auftretenshäufigkeit von einzelnen Meldungsidentifikationen der Menge von Meldungen;
b) Bestimmung einer Übergangswahrscheinlichkeit von jeweils zwei Meldungsidentifikationen bei wenigstens zwei Meldungsidentifikationen, vorzugsweise allen Meldungsidentifikationen der Menge an Meldungen, mittels der jeweiligen absoluten Auftretenshäufigkeit;
c) Identifizierung von Übergangswahrscheinlichkeiten zwischen jeweils zwei Meldungsidentifikationen, welche Übergangswahrscheinlichkeiten oberhalb eines bestimmten Schwellwertes liegen.

2. Verfahren nach Anspruch 1, bei dem nur Meldungsidentifikationen des Meldungsarchivs mit der Menge an Meldungen berücksichtigt werden, deren absolute Auftretenshäufigkeiten oberhalb eines bestimmten Schwellwertes liegen.

3. Verfahren nach Anspruch 1 oder 2, bei dem der Startzeitpunkt und/oder der Endzeitpunkt des bestimmten Zeitintervalls, in dem die Meldungen zur Auswertung berücksichtigt werden, variabel bestimmbar sind.

4. Verfahren nach einem der vorangegangenen Ansprüche, bei dem eine vorzugsweise quadratische Wahrscheinlichkeitsmatrix bestimmt wird, deren Spaltenanzahl und Zeilenanzahl jeweils einer Anzahl der sich voneinander unterscheidenden Meldungsidentifikationen entspricht, wobei die Matrix Elemente umfasst, die jeweils die Übergangswahrscheinlichkeit von jeweils zwei sich voneinander unterscheidenden Meldungsidentifikationen darstellen.

5. Verfahren nach einem der vorangegangenen Ansprüche, umfassend:
a) Festlegung einer Zeitdifferenz, die vorzugsweise kleiner ist als der Zeitbereich, in dem die Meldungen ausgewertet werden;
b) Identifizierung einer ersten Meldung, die einen ersten Meldungsidentifikation aufweist, und einer zweiten, zeitlich innerhalb der Zeitdifferenz nachfolgenden Meldung, die einen zweiten, Meldungsidentifikation aufweist, wobei die dazugehörige Übergangswahrscheinlichkeit von dem ersten Meldungsidentifikation zu dem zweiten Meldungsidentifikation oberhalb des bestimmten Schwellwertes liegen muss;
c) Zusammenfassung der beiden Meldungen als eine 2er-Kette;
d) Wiederholung der Verfahrensschritte b und c bei jeder innerhalb des zu berücksichtigenden Zeitbereichs liegenden Meldung.

6. Verfahren nach Anspruch 5, umfassend:
a) Ausgehend von einer zweiten Meldung einer 2er-Kette, die eine zweite Meldung mit einer zweiten Meldungsidentifikation aufweist, Durchsuchung der Menge an Meldungen innerhalb der Zeitdifferenz nach weiteren, zeitlich nachfolgenden Meldungen, bis ein Ende der Zeitdifferenz erreicht ist;
b) Berücksichtigen der jeweiligen weiteren Meldung, wenn die Übergangswahrscheinlichkeit der zeitlich davorliegenden Meldungsidentifikation zu der weiteren Meldungsidentifikation oberhalb des bestimmten Schwellwertes liegt;
c) Zusammenfassung der gefundenen weiteren Meldungen zusammen mit der ersten und zweiten Meldung als eine weitere Kette, insbesondere 3er-Kette, 4er-Kette oder 5er-Kette;
d) Wiederholung der Verfahrensschritte b und c bei jeder innerhalb des zu berücksichtigenden Zeitbereichs liegenden 2er-Kette.

7. Verfahren nach Anspruch 5, umfassend:
a) Ausgehend von einer zweiten Meldung einer 2er-Kette, die eine zweite Meldungsidentifikation aufweist, Durchsuchung der Menge an Meldungen innerhalb der Zeitdifferenz nach einer bestimmten Anzahl an weiteren, zeitlich nachfolgenden Meldungen;
b) Berücksichtigen der weiteren Meldung, wenn die Übergangswahrscheinlichkeit der zeitlich davorliegenden Meldungsidentifikation zu der weiteren Meldungsidentifikation oberhalb des bestimmten Schwellwertes liegt;
c) Zusammenfassung der gefundenen weiteren Meldungen sowie der ersten und zweiten Meldung als eine weitere Kette, insbesondere 3er-Kette, 4er-Kette oder 5er-Kette;
d) Wiederholung der Verfahrensschritte b und c bei jeder innerhalb des zu berücksichtigenden Zeitbereichs liegenden 2er-Kette.

8. Verfahren nach Anspruch 6 oder 7, bei dem die Zeitdifferenz nach jeder gefundenen weiteren Meldungsidentifikation von neuem zu laufen beginnt.

9. Verfahren nach einem der Ansprüche 5 bis 8, bei dem Ketten, die jeweils aus Meldungen mit bestimmten Meldungsidentifikationen bestehen, unbeachtlich einer zeitlichen Reihenfolge der Meldungen jeweils zu einer Gruppe zusammengefasst werden.

10. Verfahren nach einem der Ansprüche 5 bis 9, bei dem zur Durchführung einer nachfolgenden Auswertung nur Ketten und/oder Gruppen berücksichtigt werden, die eine Auftretenshäufigkeit aufweisen, die oberhalb eines bestimmten Schwellwertes liegt.

11. Verfahren nach einem der vorangegangenen Ansprüche, bei dem innerhalb der industriellen Anlage, insbesondere Fertigungs- oder Prozessanlage, auftretende Meldungen für die Auswertung nur berücksichtigt werden, wenn sie bestimmte Meldungsklassen aufweisen, beispielsweise ein Alarm, eine Warnung, eine Bedienmeldung, eine Prozessmeldung, eine Statusmeldung und/oder eine Systemmeldung.

12. Verfahren nach einem der vorangegangenen Ansprüche, bei dem in die Auswertung der Menge an Meldungen auch Informationen über Instandhaltungsmaßnahmen oder Wartungsarbeiten miteinbezogen werden.

13. Verfahren nach einem der vorangegangenen Ansprüche, bei dem die ermittelten zeitlichen Abfolgen und/oder Gruppen von Meldungsidentifikationen mit prozesseigenen Schrittketten der industriellen Anlage korreliert werden, um insbesondere erkennen zu können, ob bestimmte Meldungsidentifikationen nur in bestimmten Schritten der prozesseigenen Schrittketten auftreten.

14. Verfahren nach einem der Ansprüche 5 bis 13, bei dem eine zeitliche Anfangsabfolge einer Kette, die mehr als zwei Meldungen umfasst, in einem bestimmten Zeitbereich einer zweiten, zeitlich der ersten Menge an Meldungen nachfolgenden Menge an Meldungen erkannt wird und daraufhin eine bestimmte Meldung erzeugt wird, um prädiktiv auf ein bevorstehendes, zeitlich nachfolgendes Ereignis hinweisen zu können.

15. Computerprogramm mit durch einen Computer ausführbaren Programmcodeanweisungen zur Implementierung des Verfahrens nach einem der Ansprüche 1 bis 14.

16. Speichermedium mit einem durch einen Computer ausführbaren Computerprogramm gemäß Anspruch 15.

17. Computersystem, auf dem ein Computerprogramm nach Anspruch 15 implementiert ist.
